# EUROPÄISCHE PATENTSCHRIFT

(11) **EP 3 881 506 B1**
(45) Veröffentlichungstag und Bekanntmachung des Hinweises auf die Patenterteilung: **29.11.2023**
(21) Anmeldenummer: 19829191.6
(22) Anmeldetag: 20.12.2019
(51) Int. Cl.: H04L 45/021, H04L 45/586, H04L 45/28

(54) **VERFAHREN ZUM BETRIEB EINES KOMMUNIKATIONSSYSTEMS MIT REDUNDANTEN ROUTERN UND ROUTER**
METHOD FOR OPERATING A COMMUNICATION SYSTEM WITH REDUNDANT ROUTERS AND ROUTER
PROCÉDÉ DE FONCTIONNEMENT D'UN SYSTÈME DE COMMUNICATION DOTÉ DE ROUTEURS REDONDANTS ET ROUTEURS

(30) Priorität: 31.01.2019 EP 19154677
(43) Veröffentlichungstag der Anmeldung: 22.09.2021
(73) Patentinhaber: Siemens Aktiengesellschaft, 80333 München (DE)
(72) Erfinder: KESKIN, Faruk, 67065 Ludwigshafen am Rhein (DE)
(74) Vertreter: Siemens Patent Attorneys
(86) Internationale Anmeldenummer: PCT/EP2019/086522
(87) Internationale Veröffentlichungsnummer: WO 2020/156746

(56) Entgegenhaltungen:
- WO-A1-2017/175033
- CN-A- 102 711 234
- US-B1- 7 164 676
- US-B2- 9 191 271

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie High-availability Seamless Redundancy oder Parallel Redundancy Protocol, für hochverfügbare, redundant betreibbare in industriellen Kommunikationsnetze entwickelt worden. High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jeder Datenrahmen (Frame) von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Datenrahmen aus einem empfangenen Datenstrom ausgefiltert.

Media Redundancy Protocol (MRP) ist im Standard IEC 62439-2 definiert und ermöglicht eine Kompensation einzelner Verbindungsausfälle in Netzwerken mit einfacher Ringtopologie bei stoßbehafteter redundanter Übertragung von Datenrahmen. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluss einleitet. In normalem Betriebszustand prüft der Redundanz-Manager anhand von Test-Datenrahmen, ob innerhalb der Ringtopologie eine Unterbrechung aufgetreten ist. Fällt innerhalb der Ringtopologie ein Switch oder eine Verbindung aus, werden von einem Port ausgesendeten Test-Datenrahmen nicht mehr am jeweils anderen Port empfangen. Anhand dessen kann der Redundanz-Manager einen Ausfall erkennen und leitet bei einem Ausfall Datenrahmen mit Nutzdaten im Unterschied zum normalen Betriebszustand von einem Port an den anderen Port und umgekehrt weiter.

Mittels Common Address Redundancy Protocol (CARP) lassen sich Applikationsserver, Firewalls oder Router als hochverfügbare Systeme realisieren. Hierfür sind zumindest zwei zueinander redundante Systemkomponenten vorgesehen, die identische Aufgaben übernehmen können und demselben Subnetz zugeordnet sind. Die redundanten Systemkomponenten haben jeweils eine eindeutige IP- und MAC-Adresse und bilden einen Geräteverbund. Diesem Geräteverbund wird ebenfalls eine IP- und MAC-Adresse zugeordnet, über die andere Geräte oder Systeme mit dem Geräteverbund kommunizieren. Dabei übernimmt eine Systemkomponente des Geräteverbunds eine Master-Rolle zur Wahrnehmung der Aufgaben des Geräteverbunds, während die übrigen Systemkomponenten eine Slave-Rolle übernehmen. Wenn die Systemkomponente mit der Master-Rolle ausfällt, übernimmt eine Systemkomponente, der bisher eine Slave-Rolle zugeordnet war, dessen Aufgaben und ist über die dem Geräteverbund zugeordnete IP- bzw. MAC-Adresse erreichbar.

Während ein Ausfall einer Teilstrecke innerhalb einer Route durch dynamisches Routing bzw. Auswahl einer Alternativstrecke recht einfach kompensiert werden kann, ist ein Ausfall von in Endgeräten konfigurierten Default-Gateways problematischer. Steht das Default-Gateway nicht als erster Router für die Endgeräte zur Verfügung, ist grundsätzlich kein Routing aus einem betroffenen Subnetz heraus möglich. Mittels Hot Standby Router Protocol (HSRP) werden mehrere Router zu einer Gerätegruppe zusammengefasst, durch die ein logischer Router realisiert wird. Dem logischen Router wird eine IP- und MAC-Adresse zugeordnet, über die ein ausgewählter Primär-Router der Gerätegruppe erreichbar ist. Alle anderen Router stellen Sekundär-Router dar und sind bis auf Weiteres nicht über die dem logischen Router zugeordnete IP- bzw. MAC-Adresse erreichbar. Der Primär-Router signalisiert den Sekundär-Routern seine Funktionsbereitschaft mittels einer standardmäßig alle 3 Sekunden gesendeten Multicast-Nachrichten. Bleiben diese Multicast-Nachrichten über einen längeren Zeitraum, z.B. 10 Sekunden aus, wird ein bisheriger Sekundär-Router als neuer Primär-Router ausgewählt und bindet die dem logischen Router zugeordnete IP- bzw. MAC-Adresse an seine Netzwerkschnittstelle.

Probleme durch einen Ausfall eines Default-Gateways bzw. eines ersten Routers für Endgeräte können auch mittels Virtual Router Redundancy Protocol (VRRP) gelöst werden. Im Unterschied zu HSRP bietet VRRP keine IPv6-Unterstützung, ermöglicht aber eine Verwendung einer IP-Adresse eines physikalisch vorhandenen Routers als IP-Adresse eines durch eine Gerätegruppe realisierten logischen Routers. VRRPv3 (siehe IETF RFC5798) unterstützt sowohl IPv4 als auch IPv6.

Aus EP 2 127 329 A1 ist ein Verfahren zur Filterung redundanter Datenrahmen in einem Netzknoten mit zumindest zwei Ports beschrieben, die jeweils eine Sende- und eine Empfangseinrichtung umfassen. Die Datenrahmen weisen jeweils zumindest eine MAC-Quelladresse, eine Datenrahmen-ID sowie einen CRC-Wert auf. Die Sendeeinrichtungen weisen jeweils eine Sendeliste auf, in der zu sendende Datenrahmen gespeichert werden. Die Empfangseinrichtungen weisen jeweils einen Empfangsspeicher zum Speichern von empfangenen Datenrahmen auf. Zur Filterung von redundanten Datenrahmen in einem Netzknoten eines Kommunikationsnetzes wird vorgeschlagen, dass bei Empfang eines ersten Datenrahmens an einem der Ports unter Verwendung der im ersten Datenrahmen angegebenen MAC-Quelladresse und der Datenrahmen-ID des ersten Datenrahmens in der Sendeliste nach einem zweiten Datenrahmen mit identischer MAC-Quelladresse und Datenrahmen-ID gesucht wird. Falls ein solcher zweiter Datenrahmen vorhanden ist, wird der ersten Datenrahmen verworfen.

In US 9 191 271 B2 ist ein Verfahren für einen beschleunigten VRRP-Wiederherstellungsprozess beschrieben, bei dem ein ARP-Cache (Address Resolution Protocol) eines VRRP-Master-Router und mit ARP-Caches von VRRP-Backup-Routern synchronisiert wird. Ein bisheriger VRRP-Backup-Router muss damit nach einer Umschaltung als neuer VRRP-Master-Router keine Zuordnungen zwischen MAC-Adressen und IP-Adresse neu lernen, sondern kann die Zuordnungen aus dem ARP-Cache des bisherigen VRRP-Master-Router verwenden. Bei einem neuen Eintrag in seinem ARP-Cache überprüft jeder VRRP-Router jeweils, ob er als VRRP-Master-Router konfiguriert ist. Falls dies der Fall ist, sendet er den neuen Eintrag an die VRRP-Backup-Router. Somit werden die ARP-Caches inkrementell zwischen dem VRRP-Master-Router und den VRRP-Backup-Router. Dies verursacht einen nachteilig starken Nachrichtenverkehr mit jeweils wenigen Nutzdaten. Ein weiterer Nachteil besteht darin, dass nur neue ARP-Cache-Inhalte versendet werden. Falls ein VRRP-Backup-Router einen Neustart durchführt oder zu einem späteren Zeitpunkt in Betrieb genommen wird, sind diesem VRRP-Backup-Router zuvor versendete ARP-Cache-Inhalte nicht bzw. nicht mehr bekannt. Der vorliegenden Erfindung liegt die Aufgabe zugrunde, ein effizientes Verfahren zum Betrieb eines Kommunikationssystems mit redundanten Routern zu schaffen, das bei einem Ausfall eines als aktives Default-Gateway betriebenen Routers einen möglichst nahtlosen Weiterbetrieb des Kommunikationssystems ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch einen Router mit den in Anspruch 12 angegebenen Merkmalen angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikationssystems mit redundanten Routern werden Datagramme innerhalb des Kommunikationssystems von Quell-Kommunikationsgeräten zu Ziel-Kommunikationsgeräten durch Router anhand von in Routing-Tabellen der Router gespeicherten Routing-Informationen weitergeleitet. Für Kommunikationsendgeräte wird als Default-Gateway jeweils ein virtueller Router konfiguriert, dem eine Gruppe von mehreren Routern und eine virtuelle Sicherungsschicht-Adresse zugeordnet ist. Durch ein Default-Gateway wird beispielsweise sämtlicher nicht für ein jeweiliges Subnetz bestimmter Nachrichtenverkehr in ein anderes Subnetz weitergeleitet. Router aus derselben einem virtuellen Router zugeordneten Gruppe wählen untereinander einen als aktives Default-Gateway betriebenen Router aus, wobei die nicht als aktives Default-Gateway betriebenen Router als Reserve-Gateways konfiguriert und betrieben werden. Insbesondere können die Router aus derselben einem virtuellen Router zugeordneten Gruppe untereinander den als aktives Default-Gateway betriebenen Router gemäß Common Address Redundancy Protocol, Virtual Router Redundancy Protocol oder Hot Standby Router Protocol auswählen.

Die Reserve-Gateways fordern erfindungsgemäß vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte an. Die Adress-Zuordnungen zwischen Sicherungsschicht-Adressen und Vermittlungsschicht-Adressen werden vorzugsweise gemäß Adress Resolution Protocol oder Neighbor Discovery Protocol ermittelt und verwendet.

Das jeweilige aktive Default-Gateway übermittelt erfindungsgemäß nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway. Die Reserve-Gateways übernehmen vom jeweiligen aktiven Default-Gateway übermittelte Adress-Zuordnungen jeweils unmittelbar und ohne Ergebnisse eines eigenen Anlernvorgangs von Adress-Zuordnungen in ihre Konfiguration. Bei einem Ausfall eines zuvor aktiven Default-Gateway wählen die Reserve-Gateways untereinander einen neues aktives Default-Gateway aus. Das neue aktive Default-Gateway übernimmt die vor dem Ausfall übermittelten Adress-Zuordnungen und die dem virtuellen Router zugeordnete virtuelle Sicherungsschicht-Adresse für seinen Betrieb als aktives Default-Gateway. Erfindungsgemäß wird eine Güte einer Synchronisation durch die Reserve-Gateways periodisch geprüft, indem die Reserve-Gateways in ihrer jeweiligen Anforderung eine Anzahl empfangener Adress-Zuordnungen angeben. Beispielsweise erfolgt dies alle 10 Minuten. Entdeckt das aktive Default-Gateway eine Diskrepanz zu der übermittelten Anzahl, sendet es erneut alle seine Adress-Zuordnungen.

Vorteilhafterweise erfolgt ein Umschalten von einem ausgefallenen, zuvor aktiven Default-Gateway auf ein neues aktives Default-Gateway ohne zusätzlichen Anlernvorgang für Adress-Zuordnungen durch das neue aktive Default-Gateway unmittelbar auf Grundlage der vor dem Ausfall übermittelten Adress-Zuordnungen. Dies ermöglicht ein schnelles Umschalten, ohne unnötig häufigen Nachrichtenverkehr zur Adress-Synchronisierung zwischen dem aktiven Default-Gateway und den Reserve-Gateways zu verursachen.

Vorzugsweise werden die Anforderungen gespeicherter Adress-Zuordnungen durch die Reserve-Gateways jeweils als Unicast-Nachrichten an das aktive Default-Gateway übermittelt. Eine Adresse des aktiven Default-Gateways ist den Reserve-Gateways insbesondere anhand von Protokokoll-Eigenschaften bekannt. In entsprechender Weise werden dem die gespeicherten Adress-Zuordnungen vorteilhafterweise durch das jeweilige aktive Default-Gateway jeweils als Unicast-Nachrichten an die anfordernden Reserve-Gateways übermittelt. Entsprechend einer weiteren bevorzugten Ausgestaltung der vorliegenden Erfindung werden die Adress-Zuordnungen als Type-Length-Value-Datenobjekte in einem Nutzdatenbereich von Nachrichten bereitgestellt, die durch das jeweilige aktive Default-Gateway an Adress-Zuordnungen anfordernde Reserve-Gateways übermittelt werden. Dies vereinfacht eine Verifizierung von zwischen dem aktiven Default-Gateway und den Reserve-Gateways synchronisierten Adress-Zuordnungen.

Entsprechend einer weiteren bevorzugten Ausgestaltung der vorliegenden Erfindung tauschen die Router aus derselben einem virtuellen Router zugeordneten Gruppe untereinander Informationen über ihren jeweiligen Betriebszustand aus und überwachen das aktive Default-Gateway anhand dieser Informationen auf einen Ausfall. Vorteilhafterweise übermittelt das jeweilige aktive Default-Gateway zusätzlich zu den gespeicherten Adress-Zuordnungen auf eine von einem Reserve-Gateway empfangene Anforderung jeweils Informationen über eingerichtete statische Routen an das anfordernde Reserve-Gateway. Insbesondere kann das neue aktive Default-Gateway statische Routen entsprechend den vor dem Ausfall übermittelten Informationen über statische Routen einrichten.

Die Reserve-Gateways fordern die Übermittlung der Adress-Zuordnungen vorzugsweise erst nach Ablauf einer vorgegebenen Zeitdauer ab Auswahl des aktiven Default-Gateway von diesem an. Entsprechend einer weiteren bevorzugten Ausgestaltung der vorliegenden Erfindung übermittelt das jeweilige aktive Default-Gateway periodisch Aktualisierungen sämtlicher gespeicherten Adress-Zuordnungen gebündelt an die anfordernden Reserve-Gateways. Eine Anforderung zur Übermittlung kann grundsätzlich jederzeit erfolgen, insbesondere nach einem Neustart der Reserve-Gateways. Darüber hinaus können potentielle neue aktive Default-Gateways Preemption-Vorgänge verzögern, so dass diese erst nach abgeschlossener Übermittlung und Einrichtung übermittelten Address-Zuordnungen erfolgen. Dementsprechend später kann eine Rolle als aktiver Default-Gateway beansprucht werden.

Der erfindungsgemäße Router ist zur Durchführung eines Verfahrens entsprechend vorangehenden Ausführungen vorgesehen und weist mehrere Anschlüsse zur Verbindung mit jeweils einem Kommunikationsgerät sowie eine Speichereinrichtung zur Speicherung von Routing-Informationen in Routing-Tabellen auf. Der Router ist dafür ausgestaltet und eingerichtet, Datagramme von Quell-Kommunikationsgeräten zu Ziel-Kommunikationsgeräten Router anhand von Routing-Informationen weiterzuleiten und aus einer Gruppe von mehreren Routern, die einem virtuellen Router zugeordnet ist, gemeinsam mit diesen Routern einen als aktives Default-Gateway betriebenen Router auszuwählen, wobei dem virtuellen Router eine virtuelle Sicherungsschicht-Adresse zugeordnet ist und die nicht als aktives Default-Gateway betriebenen Router als Reserve-Gateways konfiguriert betrieben werden.

Erfindungsgemäß ist der Router dafür ausgestaltet und eingerichtet, als Reserve-Gateway vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anzufordern und als aktives Default-Gateway nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway zu übermitteln. Darüber hinaus ist der Router dafür ausgestaltet und eingerichtet, als Reserve-Gateway vom jeweiligen aktiven Default-Gateway übermittelte Adress-Zuordnungen jeweils unmittelbar und ohne Ergebnisse eines eigenen Anlernvorgangs von Adress-Zuordnungen in seine Konfiguration zu übernehmen und bei einem Ausfall eines zuvor aktiven Default-Gateway gemeinsam mit anderen Reserve-Gateways einen neues aktives Default-Gateway auszuwählen. Des Weiteren ist der Router dafür ausgestaltet und eingerichtet, als neues aktive Default-Gateway die vor dem Ausfall übermittelten Adress-Zuordnungen und die dem virtuellen Router zugeordnete virtuelle Sicherungsschicht-Adresse für seinen Betrieb als aktives Default-Gateway zu übernehmen und als Reserve-Gateway vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anzufordern, als aktives Default-Gateway nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway zu übermitteln, als Reserve-Gateway in seiner jeweiligen Anforderung eine Anzahl empfangener Adress-Zuordnungen anzugeben, als aktives Default-Gateway eine Güte einer Synchronisation durch die Reserve-Gateways periodisch zu prüfen und erneut alle seine Adress-Zuordnungen zu senden, wenn es eine Diskrepanz zu der übermittelten Anzahl empfangener Adress-Zuordnungen entdeckt.

Die vorliegende Erfindung wird nachfolgend an einem Ausführungsbeispiel anhand der Zeichnung näher erläutert. Es zeigt in der

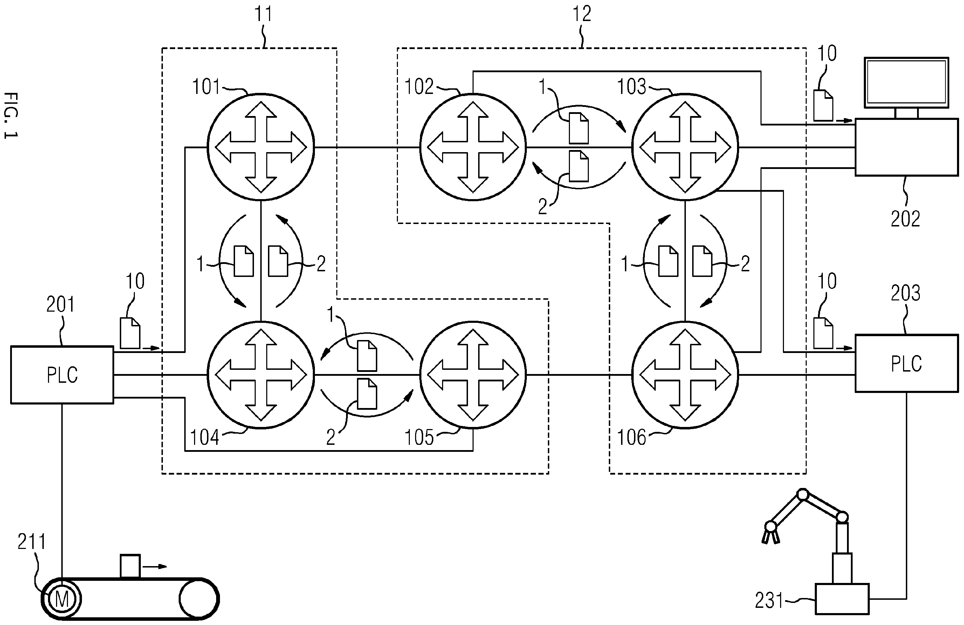

Figur 1 ein mehrere Kommunikationsgeräte umfassendes Kommunikationssystem für ein industrielles Automatisierungssystem.

Das in der Figur dargestellte Kommunikationssystem für ein industrielles Automatisierungssystem umfasst mehrere Router oder Gateways 101-106 als Datagramme weiterleitende Kommunikationsgeräte. Router bzw. Gateway können eine integrierte Firewall umfassen dienen insbesondere zum Anschluss von speicherprogrammierbaren Steuerungen 201, 203 oder Bedien- und Beobachtungsstationen 202, die ebenfalls Kommunikationsgeräte bzw. Kommunikationsendgeräte darstellen.

Speicherprogrammierbare Steuerungen 201, 203 umfassen typischerweise jeweils ein Kommunikationsmodul, eine Zentraleinheit sowie zumindest eine Eingabe/Ausgabe-Einheit dar. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201, 203 mit einem Switch oder Router oder zusätzlich mit einem Feldbus verbunden werden. Die Eingabe/AusgabeEinheit dient einem Austausch von Steuerungs- und Messgrößen zwischen der speicherprogrammierbaren Steuerung 201, 203 und einer durch die speicherprogrammierbare Steuerung 201, 203 gesteuerten Maschine oder Vorrichtung 211, 231. Die Zentraleinheit ist insbesondere für eine Ermittlung geeigneter Steuerungsgrößen aus erfassten Messgrößen vorgesehen. Obige Komponenten der speicherprogrammierbaren Steuerung 201, 203 sind beispielsweise über ein Rückwandbus-System miteinander verbunden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Durch die Router 101-106 werden Datagramme 10 von Quell-Kommunikationsgeräten zu Ziel-Kommunikationsgeräten anhand von in Routing-Tabellen der Router gespeicherten Routing-Informationen weitergeleitet. Je nach übermittelten Informationen können die speicherprogrammierbaren Steuerungen 201, 203 bzw. die Bedien- und Beobachtungsstation 202 einerseits Quell-Kommunikationsgeräte und andererseits Ziel-Kommunikationsgeräte sein und somit beide Rollen vereinen. Im vorliegenden Ausführungsbeispiel stellen die speicherprogrammierbaren Steuerungen 201, 203 und die Bedien- und Beobachtungsstation 202 Kommunikationsendgeräte dar, für die als Default-Gateway jeweils ein virtueller Router konfiguriert wird, dem eine Gruppe 11, 12 von mehreren Routern 101, 104-105, 102-103, 106 und eine virtuelle Sicherungsschicht-Adresse zugeordnet ist.

Router 101, 104-105, 102-103, 106 aus derselben einem virtuellen Router zugeordneten Gruppe 11, 12 wählen untereinander einen als aktives Default-Gateway betriebenen Router aus. Dabei werden die nicht als aktives Default-Gateway betriebenen Router als Reserve-Gateways konfiguriert und betrieben. Beispielsweise wählen die Router 101, 104-105, 102-103, 106 aus derselben einem virtuellen Router zugeordneten Gruppe 11, 12 untereinander den als aktives Default-Gateway betriebenen Router gemäß Common Address Redundancy Protocol (CARP), Virtual Router Redundancy Protocol (VRRP) oder Hot Standby Router Protocol (HSRP) aus. Darüber hinaus tauschen die Router 101, 104-105, 102-103, 106 aus derselben einem virtuellen Router zugeordneten Gruppe 11, 12 untereinander Informationen über ihren jeweiligen Betriebszustand aus und überwachen das aktive Default-Gateway anhand dieser Informationen auf einen Ausfall. Im vorliegenden Ausführungsbeispiel wird von einem Szenario ausgegangen, bei dem die Router 104 und 103 als Default-Gateways betrieben werden.

Die Reserve-Gateways 101, 105, 102, 106 fordern vom jeweiligen aktiven Default-Gateway 104, 103 eine Übermittlung gespeicherter Adress-Zuordnungen zwischen MAC-Adressen und IP-Adressen erfasster Kommunikationsgeräte an und übermitteln hierzu entsprechende Anforderungen 1. Die Adress-Zuordnungen zwischen MAC-Adressen und IP-Adressen werden beispielsweise gemäß Adress Resolution Protocol (ARP) oder Neighbor Discovery Protocol (NDP) ermittelt und verwendet. Vorzugsweise fordern die Reserve-Gateways 101, 105, 102, 106 die Übermittlung der Adress-Zuordnungen, insbesondere im Sinn einer Initial Network Convergence, erst nach Ablauf einer vorgegebenen Zeitdauer ab Auswahl des aktiven Default-Gateway 104, 103 von diesem an. Nachfolgende Ausführungen sind grundsätzlich sowohl für IPv6-Adressen und IPv6-basierte-Protokolle als auch für IPv4-Adressen und IPv4-basierte-Protokolle anwendbar.

Das jeweilige aktive Default-Gateway 104, 103 übermittelt nur auf eine von einem Reserve-Gateway 101, 105, 102, 106 empfangene Anforderung 1 gespeicherter Adress-Zuordnungen sämtliche gespeicherten Adress-Zuordnungen 2 gebündelt jeweils an ein anforderndes Reserve-Gateway. Die Reserve-Gateways 101, 105, 102, 106 übernehmen vom jeweiligen aktiven Default-Gateway 104, 103 übermittelte Adress-Zuordnungen jeweils unmittelbar und ohne Ergebnisse eines eigenen Anlernvorgangs von Adress-Zuordnungen in ihre Konfiguration. Vorzugsweise übermittelt das jeweilige aktive Default-Gateway 104, 103 zusätzlich zu den gespeicherten Adress-Zuordnungen 2 auf eine von einem Reserve-Gateway 101, 105, 102, 106 empfangene Anforderung 1 jeweils Informationen über eingerichtete statische Routen an das anfordernde Reserve-Gateway. Darüber hinaus übermittelt das jeweilige aktive Default-Gateway 104, 103 nach einer erstmaligen Anforderung periodisch Aktualisierungen sämtlicher gespeicherten Adress-Zuordnungen 2 gebündelt an die anfordernden Reserve-Gateways.

Bei einer besonders bevorzugten Ausführungsform werden die Anforderungen 1 gespeicherter Adress-Zuordnungen durch die Reserve-Gateways 101, 105, 102, 106 jeweils als Unicast-Nachrichten an das aktive Default-Gateway 104, 103 übermittelt. Dementsprechend werden auch die gespeicherten Adress-Zuordnungen 2 durch das jeweilige aktive Default-Gateway 104, 103 jeweils als Unicast-Nachrichten an die anfordernden Reserve-Gateways übermittelt. Außerdem werden die Adress-Zuordnungen als Type-Length-Value-Datenobjekte in einem Nutzdatenbereich von Nachrichten 2 bereitgestellt werden, die durch das jeweilige aktive Default-Gateway 104, 103 an Adress-Zuordnungen anfordernde Reserve-Gateways übermittelt werden.

Bei einem Ausfall eines zuvor aktiven Default-Gateway 104, 103 wählen die Reserve-Gateways 101, 105, 102, 106 untereinander einen neues aktives Default-Gateway aus. Beispielsweise können der Router 101 bzw. 106 als neues aktives Default-Gateway ausgewählt werden. Das neue aktive Default-Gateway 101, 106 übernimmt die vor dem Ausfall übermittelten Adress-Zuordnungen 2 und die dem virtuellen Router zugeordnete virtuelle Sicherungsschicht-Adresse für seinen Betrieb als aktives Default-Gateway und richtet ggf. statische Routen entsprechend den vor dem Ausfall übermittelten Informationen über statische Routen ein. Insbesondere erfolgt ein Umschalten von einem ausgefallenen, zuvor aktiven Default-Gateway 104, 103 auf ein neues aktives Default-Gateway 101, 106 im vorliegenden Ausführungsbeispiel ohne zusätzlichen Anlernvorgang für Adress-Zuordnungen durch das neue aktive Default-Gateway, sondern unmittelbar auf Grundlage der vor dem Ausfall übermittelten Adress-Zuordnungen.

## Patentansprüche

1. Verfahren zum Betrieb eines Kommunikationssystems mit redundanten Routern, bei dem
- Datagramme (10) innerhalb des Kommunikationssystems von Quell-Kommunikationsgeräten zu Ziel-Kommunikationsgeräten durch Router (101-106) anhand von in Routing-Tabellen der Router gespeicherten Routing-Informationen weitergeleitet werden,
- für Kommunikationsendgeräte (201-203) als Default-Gateway jeweils ein virtueller Router konfiguriert wird, dem eine Gruppe (11, 12) von mehreren Routern und eine virtuelle Sicherungsschicht-Adresse zugeordnet ist,
- Router aus derselben einem virtuellen Router zugeordneten Gruppe untereinander einen als aktives Default-Gateway betriebenen Router (104, 103) auswählen, wobei die nicht als aktives Default-Gateway betriebenen Router als Reserve-Gateways konfiguriert und betrieben werden,
- die Reserve-Gateways vom jeweiligen aktiven Default-Gateway übermittelte Adress-Zuordnungen jeweils unmittelbar und ohne Ergebnisse eines eigenen Anlernvorgangs von Adress-Zuordnungen in ihre Konfiguration übernehmen,
- die Reserve-Gateways bei einem Ausfall eines zuvor aktiven Default-Gateway untereinander einen neues aktives Default-Gateway auswählen,
- das neue aktive Default-Gateway die vor dem Ausfall übermittelten Adress-Zuordnungen und die dem virtuellen Router zugeordnete virtuelle Sicherungsschicht-Adresse für seinen Betrieb als aktives Default-Gateway übernimmt,
**dadurch gekennzeichnet, dass**
- die Reserve-Gateways vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anfordern,
- das jeweilige aktive Default-Gateway (104, 103) nur auf eine von einem Reserve-Gateway empfangene Anforderung (1) gespeicherter Adress-Zuordnungen sämtliche gespeicherten Adress-Zuordnungen (2) gebündelt jeweils an ein anforderndes Reserve-Gateway übermittelt,
- eine Güte einer Synchronisation durch die Reserve-Gateways periodisch geprüft wird, indem die Reserve-Gateways in ihrer jeweiligen Anforderung eine Anzahl empfangener Adress-Zuordnungen angeben, wobei das aktive Default-Gateway erneut alle seine Adress-Zuordnungen sendet, wenn es eine Diskrepanz zu der übermittelten Anzahl entdeckt.

2. Verfahren nach Anspruch 1,
bei dem ein Umschalten von einem ausgefallenen, zuvor aktiven Default-Gateway auf ein neues aktives Default-Gateway ohne zusätzlichen Anlernvorgang für Adress-Zuordnungen durch das neue aktive Default-Gateway unmittelbar auf Grundlage der vor dem Ausfall übermittelten Adress-Zuordnungen erfolgt.

3. Verfahren nach einem der Ansprüche 1 oder 2,
bei dem die Router aus derselben einem virtuellen Router zugeordneten Gruppe untereinander Informationen über ihren jeweiligen Betriebszustand austauschen und das aktive Default-Gateway anhand dieser Informationen auf einen Ausfall überwachen.

4. Verfahren nach einem der Ansprüche 1 bis 3,
bei dem das jeweilige aktive Default-Gateway zusätzlich zu den gespeicherten Adress-Zuordnungen auf eine von einem Reserve-Gateway empfangene Anforderung jeweils Informationen über eingerichtete statische Routen an das anfordernde Reserve-Gateway übermittelt.

5. Verfahren nach Anspruch 4,
bei dem das neue aktive Default-Gateway statische Routen entsprechend den vor dem Ausfall übermittelten Informationen über statische Routen einrichtet.

6. Verfahren nach einem der Ansprüche 1 bis 5,
bei dem die Reserve-Gateways die Übermittlung der Adress-Zuordnungen erst nach Ablauf einer vorgegebenen Zeitdauer ab Auswahl des aktiven Default-Gateway von diesem anfordern.

7. Verfahren nach einem der Ansprüche 1 bis 6,
bei dem die Adress-Zuordnungen zwischen Sicherungsschicht-Adressen und Vermittlungsschicht-Adressen gemäß Adress Resolution Protocol oder Neighbor Discovery Protocol ermittelt und verwendet werden.

8. Verfahren nach einem der Ansprüche 1 bis 7,
bei dem das jeweilige aktive Default-Gateway periodisch Aktualisierungen sämtlicher gespeicherten Adress-Zuordnungen gebündelt an die anfordernden Reserve-Gateways übermittelt.

9. Verfahren nach einem der Ansprüche 1 bis 8,
bei dem die Anforderungen gespeicherter Adress-Zuordnungen durch die Reserve-Gateways jeweils als Unicast-Nachrichten an das aktive Default-Gateway übermittelt werden und bei dem die gespeicherten Adress-Zuordnungen durch das jeweilige aktive Default-Gateway jeweils als Unicast-Nachrichten an die anfordernden Reserve-Gateways übermittelt werden.

10. Verfahren nach einem der Ansprüche 1 bis 9,
bei dem die Adress-Zuordnungen als Type-Length-Value-Datenobjekte in einem Nutzdatenbereich von Nachrichten bereitgestellt werden, die durch das jeweilige aktive Default-Gateway an Adress-Zuordnungen anfordernde Reserve-Gateways übermittelt werden.

11. Verfahren nach einem der Ansprüche 1 bis 10,
bei dem die Router aus derselben einem virtuellen Router zugeordneten Gruppe untereinander den als aktives Default-Gateway betriebenen Router gemäß Common Address Redundancy Protocol, Virtual Router Redundancy Protocol oder Hot Standby Router Protocol auswählen.

12. Router zur Durchführung eines Verfahrens nach einem der Ansprüche 1 bis 11 mit
- mehreren Anschlüssen zur Verbindung mit jeweils einem Kommunikationsgerät,
- einer Speichereinrichtung zur Speicherung von Routing-Informationen in Routing-Tabellen,
wobei der Router dafür ausgestaltet und eingerichtet ist,
- Datagramme von Quell-Kommunikationsgeräten zu Ziel-Kommunikationsgeräten Router anhand von Routing-Informationen weiterzuleiten,
- aus einer Gruppe von mehreren Routern, die einem virtuellen Router zugeordnet ist, gemeinsam mit diesen Routern einen als aktives Default-Gateway betriebenen Router auszuwählen, wobei dem virtuellen Router eine virtuelle Sicherungsschicht-Adresse zugeordnet ist und die nicht als aktives Default-Gateway betriebenen Router als Reserve-Gateways konfiguriert und betrieben werden,
- als Reserve-Gateway vom jeweiligen aktiven Default-Gateway übermittelte Adress-Zuordnungen jeweils unmittelbar und ohne Ergebnisse eines eigenen Anlernvorgangs von Adress-Zuordnungen in seine Konfiguration zu übernehmen,
- bei einem Ausfall eines zuvor aktiven Default-Gateway gemeinsam mit anderen Reserve-Gateways einen neues aktives Default-Gateway auszuwählen und
- als neues aktive Default-Gateway die vor dem Ausfall übermittelten Adress-Zuordnungen und die dem virtuellen Router zugeordnete virtuelle Sicherungsschicht-Adresse für seinen Betrieb als aktives Default-Gateway zu übernehmen,
**dadurch gekennzeichnet, dass** der Router dafür ausgestaltet und eingerichtet ist,
- als Reserve-Gateway vom jeweiligen aktiven Default-Gateway eine Übermittlung gespeicherter Adress-Zuordnungen zwischen Sicherungsschicht-Adressen und Vermittlungsschicht-Adressen erfasster Kommunikationsgeräte anzufordern,
- als aktives Default-Gateway nur auf eine von einem Reserve-Gateway empfangene Anforderung gespeicherter Adress-Zuordnungen sämtliche gespeicherten Adress-Zuordnungen gebündelt jeweils an ein anforderndes Reserve-Gateway zu übermitteln,
- als Reserve-Gateway in seiner jeweiligen Anforderung eine Anzahl empfangener Adress-Zuordnungen anzugeben,
- als aktives Default-Gateway eine Güte einer Synchronisation durch die Reserve-Gateways periodisch zu prüfen und erneut alle seine Adress-Zuordnungen zu senden, wenn es eine Diskrepanz zu der übermittelten Anzahl empfangener Adress-Zuordnungen entdeckt.

## Claims

1. Method for operating a communication system having redundant routers, in which
- datagrams (10) are forwarded within the communication system from source communication devices to destination communication devices by routers (101-106) on the basis of routing information stored in routing tables of the routers,
- a virtual router that has an assigned group (11, 12) of multiple routers and an allocated virtual data link layer address is configured as the default gateway for respective communication terminals (201-203),
- routers from the same group assigned to a virtual router select one router (104, 103) from among one another that is operated as the active default gateway, the routers that are not operated as the active default gateway being configured and operated as reserve gateways,
- the reserve gateways adopt respective address allocations transmitted by the respective active default gateway in their configuration directly and without results of a training procedure of their own for address allocations,
- the reserve gateways select a new active default gateway from among one another if a previously active default gateway fails,
- the new active default gateway adopts the address allocations transmitted before the failure and the virtual data link layer address allocated to the virtual router for its operation as the active default gateway,
**characterized in that**
- the reserve gateways request from the respective active default gateway a transmission of stored address allocations between data link layer addresses and network layer addresses of detected communication devices,
- the respective active default gateway (104, 103) transmits all of the respective stored address allocations (2) in bundled form to a requesting reserve gateway only in response to a request (1) for stored address allocations that is received from a reserve gateway,
- a quality of a synchronization by the reserve gateways is periodically checked by virtue of the reserve gateways specifying a number of received address allocations in their respective request, with the active default gateway sending all of its address allocations again if it discovers a discrepancy with respect to the transmitted number.

2. Method according to Claim 1,
in which a switchover from a failed, previously active default gateway to a new active default gateway is effected directly on the basis of the address allocations transmitted before the failure, without an additional training procedure for address allocations by the new active default gateway.

3. Method according to either of Claims 1 and 2,
in which the routers from the same group assigned to a virtual router interchange information about their respective operating state among one another and monitor the active default gateway for a failure on the basis of this information.

4. Method according to one of Claims 1 to 3,
in which the respective active default gateway responds to a respective request received from a reserve gateway by transmitting to the requesting reserve gateway, in addition to the stored address allocations, information about established static routes.

5. Method according to Claim 4,
in which the new active default gateway establishes static routes in accordance with the information about static routes that was transmitted before the failure.

6. Method according to one of Claims 1 to 5,
in which the reserve gateways request the transmission of the address allocations from the active default gateway only after a predefined period of time from selection of the active default gateway has elapsed.

7. Method according to one of Claims 1 to 6,
in which the address allocations between data link layer addresses and network layer addresses are ascertained and used according to the Address Resolution Protocol or Neighbor Discovery Protocol.

8. Method according to one of Claims 1 to 7,
in which the respective active default gateway periodically transmits updates for all of the stored address allocations in bundled form to the requesting reserve gateways.

9. Method according to one of Claims 1 to 8,
in which the respective requests for stored address allocations are transmitted by the reserve gateways to the active default gateway as unicast messages and in which the respective stored address allocations are transmitted by the respective active default gateway to the requesting reserve gateways as unicast messages.

10. Method according to one of Claims 1 to 9,
in which the address allocations are provided as type-length-value data objects in a payload data area of messages that are transmitted by the respective active default gateway to reserve gateways requesting address allocations.

11. Method according to one of Claims 1 to 10,
in which the routers from the same group assigned to a virtual router select the router that is operated as the active default gateway from among one another according to the Common Address Redundancy Protocol, Virtual Router Redundancy Protocol or Hot Standby Router Protocol.

12. Router for carrying out a method according to one of Claims 1 to 11, having
- multiple connections for connection to a respective communication device,
- a memory device for storing routing information in routing tables,
wherein the router is designed and set up
- to forward datagrams from source communication devices to destination communication devices on the basis of routing information,
- to select from a group of multiple routers that is assigned to a virtual router, together with these routers, a router that is operated as the active default gateway, wherein the virtual router has an allocated virtual data link layer address and the routers that are not operated as the active default gateway are configured and operated as reserve gateways,
- as a reserve gateway, to adopt respective address allocations transmitted by the respective active default gateway in its configuration directly and without results of a training procedure of its own for address allocations,
- to select, together with other reserve gateways, a new active default gateway if a previously active default gateway fails, and
- as the new active default gateway, to adopt the address allocations transmitted before the failure and the virtual data link layer address allocated to the virtual router for its operation as the active default gateway,
**characterized in that** the router is designed and set up
- as a reserve gateway, to request from the respective active default gateway a transmission of stored address allocations between data link layer addresses and network layer addresses of detected communication devices,
- as the active default gateway, to transmit all of the respective stored address allocations in bundled form to a requesting reserve gateway only in response to a request for stored address allocations that is received from a reserve gateway,
- as a reserve gateway, to specify a number of received address allocations in its respective request,
- as the active default gateway, to periodically check a quality of a synchronization by the reserve gateways and to send all of its address allocations again if it discovers a discrepancy with respect to the transmitted number of received address allocations.

## Revendications

1. Procédé pour faire fonctionner un système de communication ayant des routeurs redondants, dans lequel
- on achemine à l'aide d'informations de routage mises en mémoire dans des tables de routage de routeur des datagrammes (10) au sein du système de communication d'appareils de communication source à des appareils de communication cible par les routeurs (101 à 106),
- pour des terminaux (201 à 203) de communication, on configure comme passerelle de défaut respectivement un routeur virtuel, auquel on associe un groupe (11, 12) de plusieurs routeurs et une adresse de couche de sécurisation virtuelle,
- des routeurs du même groupe associés à un routeur virtuel choisissent entre eux un routeur (104, 103) fonctionnant comme passerelle de défaut active, dans lequel on configure et on fait fonctionner en passerelle de réserve les routeurs ne fonctionnant pas en passerelle de défaut active,
- les passerelles de réserve prennent en charge dans leur configuration respectivement, directement et sans des résultats d'une opération d'apprentissage propre d'association d'adresses, des associations d'adresses transmises par la passerelle de défaut active respective,
- les passerelles de réserve sélectionnent s'il se produit une défaillance d'une passerelle de défaut active auparavant entre eux une nouvelle passerelle de défaut active,
- la nouvelle passerelle de défaut active prend en charge pour son fonctionnement en tant que passerelle de défaut active les associations d'adresse transmises avant la défaillance et l'adresse de couche de sécurisation virtuelle associée au routeur virtuel,
**caractérisé en ce que**
- les passerelles de réserve demandent à la passerelle de défaut active respective une transmission d'association d'adresse mises en mémoire entre des adresses de couche de sécurisation et des adresses de couches de commutation d'appareil de communication détectés,
- la passerelle (104, 103) de défaut active respective ne transmet en faisceau respectivement à une passerelle de réserve demandeuse que sur une demande (1) reçue d'une passerelle de réserve des associations d'adresse mises en mémoire de l'ensemble des associations (2) d'adresses mises en mémoire,
- on contrôle périodiquement une qualité d'une synchronisation par les passerelles de réserve par le fait que les passerelles de réserve indiquent dans leur demande respective un nombre d'association d'adresses reçues, dans lequel la passerelle de défaut active envoie à nouveau toutes ces associations d'adresses si elle découvre une discordance avec le nombre transmis.

2. Procédé suivant la revendication 1,
dans lequel un passage d'une passerelle de défaut défaillante, active auparavant, à une nouvelle passerelle de défaut active sans opération supplémentaire d'apprentissage pour des associations d'adresses par la nouvelle passerelle de défaut active s'effectue directement sur la base des associations d'adresse transmises avant la défaillance.

3. Procédé suivant l'une des revendications 1 ou 2,
dans lequel les routeurs du même groupe associé à un routeur virtuel échangent entre eux des informations sur leur état de fonctionnement respectif et la passerelle de défaut active contrôle s'il y a une défaillance à l'aide de ces informations.

4. Procédé suivant l'une des revendications 1 à 3,
dans lequel la passerelle de défaut active respective transmet à la passerelle de réserve demandeuse, supplémentairement aux associations d'adresses mises en mémoire, sur une demande reçue d'une passerelle de réserve, respectivement des informations sur des routages statiques installés.

5. Procédé suivant la revendication 4,
dans lequel la nouvelle passerelle de défaut active installe des routages statiques conformément aux informations, transmises avant la défaillance, sur des routages statiques.

6. Procédé suivant l'une des revendications 1 à 5,
dans lequel les passerelles de réserve demandent à la passerelle de défaut active la transmission des associations d'adresse seulement après l'expiration d'une durée donnée à l'avance à partir de la sélection de la passerelle de défaut active.

7. Procédé suivant l'une des revendications 1 à 6,
dans lequel on détermine et on utilise les associations d'adresse entre des adresses de couche de sécurisation et des adresses de couche de commutation suivant le protocole Adress Resolution ou le protocole Neighbor Discovery.

8. Procédé suivant l'une des revendications 1 à 7,
dans lequel la passerelle de défaut active respective transmet périodiquement des mises à jour de l'ensemble des associations d'adresse mis en mémoire en faisceau aux passerelles de réserve demandeuses.

9. Procédé suivant l'une des revendications 1 à 8,
dans lequel on transmet les demandes d'association d'adresse mises en mémoire par les passerelles de réserve respectivement sous la forme de messages Unicast à la passerelle de défaut active et dans lequel on transmet les associations d'adresses mises en mémoire par la passerelle de défaut active respective respectivement sous la forme de messages Unicast aux passerelles de réserve demandeuses.

10. Procédé suivant l'une des revendications 1 à 9,
dans lequel on met à disposition les associations d'adresse en tant qu'objet de données de valeur de longueur type dans une partie de données utiles de message que l'on transmet par la passerelle de défaut active respective à des passerelles de réserve demandant des associations d'adresse.

11. Procédé suivant l'une des revendications 1 à 10,
dans lequel les routeurs d'un même groupe associé à un routeur virtuel sélectionnent entre eux le routeur fonctionnant comme passerelle de défaut active suivant le protocole Common Address Redundancy, le protocole Virtual Router Redundancy ou le protocole Hot Stanby Router.

12. Routeur pour effectuer un procédé suivant l'une des revendications 1 à 11 comprenant
- plusieurs bornes de liaison à respectivement un appareil de communication,
- un dispositif de mémoire pour mettre en mémoire des informations de routage dans des tables de routage,
dans lequel le routeur est conformé et agencé pour
- acheminer des datagrammes d'appareils de communication source à des appareils de communication cible par des routeurs à l'aide d'informations de routage,
- sélectionner dans un groupe de plusieurs routeurs, qui est associé à un routeur virtuel, conjointement avec les routeurs un routeur fonctionnant en passerelle de défaut active, dans lequel au routeur virtuel est associée une adresse de couche de sécurisation virtuelle et on configure et on fait fonctionner en passerelle de réserve les routeurs ne fonctionnant pas en passerelle de défaut active,
- pour prendre en charge dans sa configuration comme passerelle de réserve des associations d'adresse transmises par la passerelle de défaut active respective respectivement directement et sans résultat d'une opération propre d'apprentissage d'associations d'adresse,
- s'il se produit une défaillance d'une passerelle de défaut active auparavant, sélectionner conjointement avec d'autres passerelles de réserve une nouvelle passerelle de défaut active et
- prendre en charge pour son fonctionnement comme passerelle de défaut active comme nouvelle passerelle de défaut active les associations d'adresses transmises avant la défaillance et les adresses de couche de sécurisation virtuelle associées au routeur virtuel,
**caractérisé en ce que** le routeur est conformé et agencé
- pour, comme passerelle de réserve, demander à la passerelle de défaut active respective une transmission d'associations d'adresse mises en mémoire d'appareils de communication détecter entre des adresses de couche de sécurisation et des adresses de couche de commutation,
- transmettre en faisceau respectivement à une passerelle de réserve demandeuse comme passerelle de défaut active, seulement sur une demande reçue d'une passerelle de réserve des associations d'adresses mises en mémoire, l'ensemble des associations d'adresses mises en mémoire,
- indiquer comme passerelle de réserve dans sa demande respective un nombre d'association d'adresses reçues,
- contrôler périodiquement par les passerelles de réserve, comme passerelle de défaut active, une qualité de synchronisation et envoyer à nouveau toutes ces associations d'adresses si une discordance par rapport au nombre transmis d'associations d'adresses reçues est découverte.
